# EUROPEAN PATENT SPECIFICATION

(11) **EP 3 952 068 B1**
(45) Date of publication and mention of the grant of the patent: **07.02.2024**
(21) Application number: 20822188.7
(22) Date of filing: 19.05.2020
(51) Int. Cl.: H02K 3/04, H02K 3/12, H02K 15/00

(54) **ROTATING ELECTRIC MACHINE**
ROTIERENDE ELEKTRISCHE MASCHINE
MACHINE ÉLECTRIQUE ROTATIVE

(30) Priority: 10.06.2019 JP 2019107820
(43) Date of publication of application: 09.02.2022
(73) Proprietor: Daikin Industries, Ltd., Osaka-shi, Osaka 530-0001 (JP)
(72) Inventor: IMAI Takahiro, Osaka-shi, Osaka 530-8323 (JP); SATOU Naoyuki, Osaka-shi, Osaka 530-8323 (JP); ITOU Masatoshi, Osaka-shi, Osaka 530-8323 (JP)
(74) Representative: Goddar, Heinz J.
(86) International application number: PCT/JP2020/019800
(87) International publication number: WO 2020/250631

(56) References cited:
- EP-A1- 3 214 732
- WO-A1-2015/040782
- WO-A1-2018/028856
- WO-A1-2019/059294
- JP-A- 2008 228 541
- JP-A- 2016 139 563
- US-A1- 2019 013 720
- US-B2- 9 496 773

## Description

### Technical Field

The present disclosure relates to a rotating electric machine.

### Background Art

A rotating electric machine including a stator that includes a segment coil is known in the art (for example, PTL 1). The segment coil in PTL 1 is formed of a plurality of conductor segments. PTL 1 discloses a method of joining the plurality of conductor segments that are previously deformed to be in contact with each other.
US 2019/013720 A1, US 9 496 773 B2 and WO 2018/028856 each disclose a rotating electric machine comprising a stator that includes a segment coil formed of a plurality of conductor segments, wherein each of the conductor segments includes a covered part that includes a conductor and an insulating material covering the conductor and an exposed part that includes an exposed conductor integral with the conductor of the covered part and that constitutes an end portion of the conductor segment.

### Citation List

### Patent Literature

PTL 1: Japanese Unexamined Patent Application Publication No. 2016-131453

### Summary of Invention

### Technical Problem

The method in PTL 1 is, however, not easily applied to conductor segments of some types. For example, when a conductor segment has a thick insulating film, the conductor segment is required to be largely deformed. Thus, it may be difficult to bring the plurality of conductor segments into contact with each other.

An object of the present invention is to enable easy joining of a plurality of conductor segments.

### Solution to Problem

A first aspect of the present invention is directed to a rotating electric machine (10) according to claim 1.

In the first aspect, it is possible to easily join the conductors (33a) of the exposed parts (33) of the plurality of conductor segments (31) to each other.

According to a second aspect of the present invention, in the first aspect, the conductor (33a) of the exposed part (33) expands on both sides in the arrangement direction more than the conductor (32a) of the covered part (32).

In the second aspect, it is possible to easily join the conductors (33a) of the exposed parts (33) of three or more conductor segments (31) to each other.

According to a third aspect of the present invention, in the first or second aspect, a position of an end surface of an expansion part of the conductor (33a) of the exposed part (33) and a position of an outer surface of the insulating material (32b) of the covered part (32) are identical to each other in the arrangement direction.

In the third aspect, it is possible to easily join the conductors (33a) of the exposed parts (33) of the plurality of conductor segments (31) to each other.

According to a fourth aspect of the present invention, in any one of the first to third aspects, the plurality of conductor segments (31) are each constituted by a flat wire whose cross-sectional shape is a rectangular shape and are arranged such that a short direction of the rectangular shape coincides with the arrangement direction.

In the fourth aspect, it is possible to easily form the expansion part of the conductor segment (31).

According to a fifth aspect of the present invention, in any one of the first to fourth aspect, the conductor (33a) of the exposed part (33) of each of the conductor segments (31) includes a protruding portion (33b) and a recessed portion (33c), and the protruding portion (33b) of the conductor segment (31) is fitted into the recessed portion (33c) of the conductor segment (31) adjacent thereto.

In the fifth aspect, it is possible to join the plurality of conductor segments (31) more easily.

According to a sixth aspect of the present invention, in the fifth aspect, a distance (D1) from a tip of the exposed part (33) to the protruding portion (33b) and a distance (D2) from the tip of the exposed part (33) to the recessed portion (33c) are equal to each other in each of the conductor segments (31).

In the sixth aspect, it is possible to join the plurality of conductor segments (31) more easily.

According to a seventh aspect of the present invention, in the fifth or sixth aspect, a height (H) of the protruding portion (33b) is larger than a depth (D) of the recessed portion (33c) in each of the conductor segments (31).

In the seventh aspect, for example, it is possible to perform solder joining easily.

According to an eighth aspect of the present invention, in any one of the first to seventh aspects, the exposed parts (33) of the plurality of conductor segments (31) are joined to each other by soldering.

According to a ninth aspect of the present invention, in any one of the first to seventh aspects, the exposed parts (33) of the plurality of conductor segments (31) are joined to each other by welding.

### Brief Description of Drawings

[Fig. 1] Fig. 1 is a perspective view of a rotating electric machine according to an embodiment.
[Fig. 2] Fig. 2 is a perspective view illustrating a vicinity of end portions of a plurality of conductor segments.
[Fig. 3] Fig. 3 is a three-side view illustrating a vicinity of an end portion of a conductor segment.
[Fig. 4] Fig. 4 is a three-side view illustrating a vicinity of end portions of a plurality of conductor segments.
[Fig. 5] Fig. 5 is a front view for describing a method of processing a conductor segment.

### Description of Embodiments

An embodiment will be described. A rotating electric machine (10) according to the present embodiment is configured as an electric motor for driving a load. The rotating electric machine (10) is applied to, for example, a rotary compressor. Intended use of the rotating electric machine (10) is, however, not limited thereto.

### <Rotating Electric Machine>

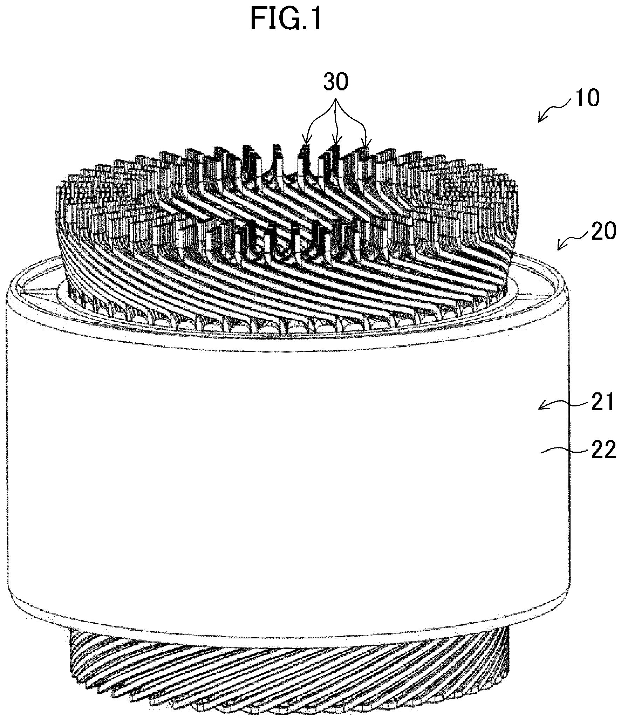

As illustrated in Fig. 1, the rotating electric machine (10) includes a stator (20) and a rotor (not illustrated) provided on the inner peripheral side of the stator (20). The stator (20) includes a stator core (21) and a segment coil (30).

The stator core (21) is substantially a cylindrical member. The stator core (21) is constituted by a magnetic body (for example, a laminated steel sheet). The stator core (21) includes a back yoke portion (22) and a plurality of teeth portions (not illustrated) extending from the inner peripheral surface of the back yoke portion (22) to the inner side in a radial direction. A slot for accommodating the segment coil (30) is formed between the teeth portions adjacent to each other in a circumferential direction.

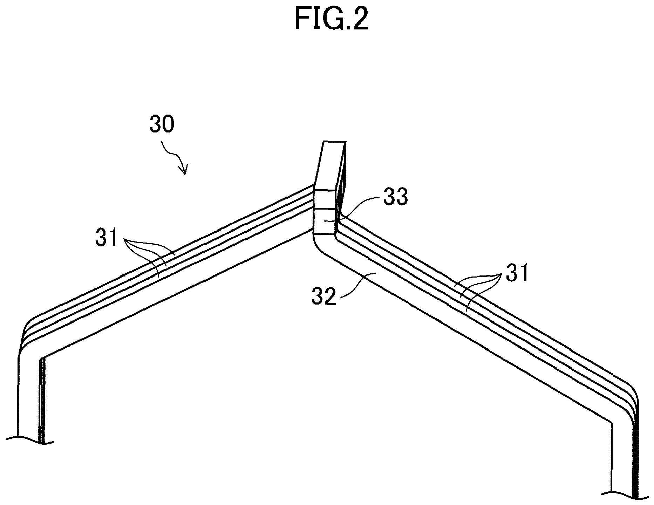

The segment coil (30) is provided to be wound around the teeth portions of the stator core (21). The segment coil (30) is mainly constituted by an electric conductor (for example, copper). As illustrated in Fig. 2, the segment coil (30) is formed of a plurality (six in this example) of substantially U-shaped conductor segments (31) that are joined to each other by soldering. When electric power is supplied to the segment coil (30) from a power source (not illustrated), a rotating magnetic field is generated in the stator (20) and rotates the rotor.

### <Conductor Segment>

As illustrated in Fig. 2 to Fig. 4, each of the conductor segments (31) is constituted by a flat wire whose cross-sectional shape is a rectangular shape. Each of the conductor segments (31) includes a covered part (32) and an exposed part (33).

The covered part (32) constitutes the most part of the conductor segment (31). The covered part (32) includes a conductor (32a) and an insulating material (32b) covering the conductor (32a). The conductor (32a) is constituted by, for example, copper. The insulating material (32b) is constituted by, for example, enamel. When needing high insulation properties, the insulating material (32b) may be constituted by a PEEK material or the like to be thick.

The exposed part (33) constitutes an end portion of the conductor segment (31). The exposed part (33) is constituted by an exposed conductor (33a) integral with the conductor (32a) of the covered part (32). The conductor (33a) is constituted by, for example, copper.

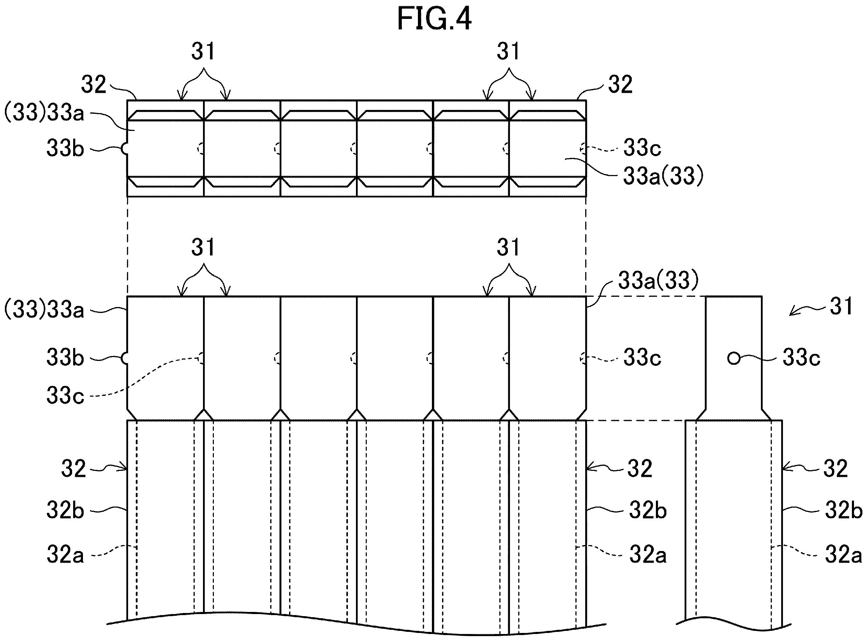

The conductor (33a) of the exposed part (33) expands on both sides in an arrangement direction (left-right direction in Fig. 4) more than the conductor (32a) of the covered part (32). Here, the "arrangement direction" is a direction in which the exposed parts (33) of the plurality of conductor segments (31) are arranged. The arrangement direction in the present embodiment coincides with the short direction of the rectangular shape of a cross-section of the conductor segment (31).

In the arrangement direction, the position of an end surface of an expansion part of the conductor (33a) of the exposed part (33) and the position of the outer surface of the insulating material (32b) of the covered part (32) are identical to each other. In other words, the end surface of the expansion part of the conductor (33a) of the exposed part (33) and the outer surface of the insulating material (32b) of the covered part (32) are flush with each other.

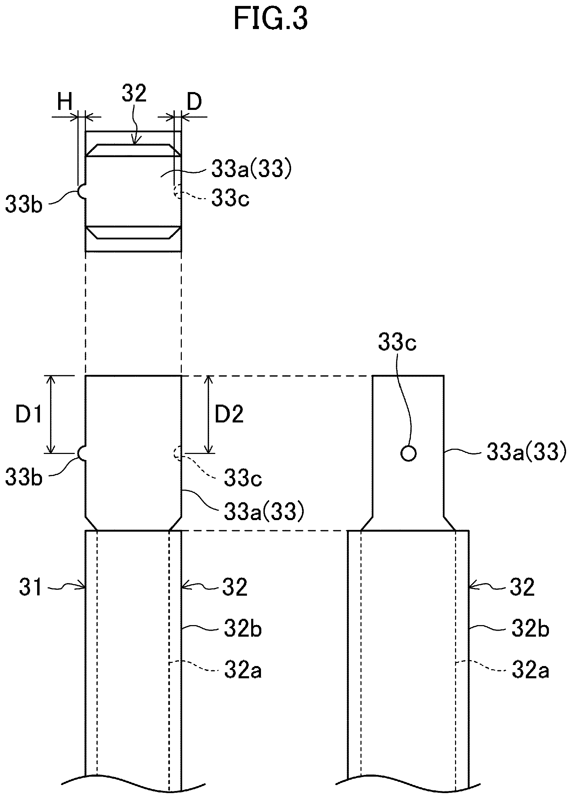

The conductor (33a) of the exposed part (33) includes a protruding portion (33b) on a surface thereof on one side (left side in Fig. 3) in the arrangement direction. The conductor (33a) of the exposed part (33) includes a recessed portion (33c) on a surface thereof on the other side in the arrangement direction. In a state in which the plurality of conductor segments (31) are arranged, the protruding portion (33b) of the exposed part (33) is fitted into the recessed portion (33c) of the exposed part (33) adjacent thereto.

A distance (D1) from the tip of the exposed part (33) to the protruding portion (33b) (specifically, the distance (D1) from the tip of the exposed part (33) in a direction in which the exposed part (33) extends to the center position of the protruding portion (33b)) and a distance (D2) from the tip of the exposed part (33) to the recessed portion (33c) (specifically, the distance (D2) from the tip of the exposed part (33) in the direction in which the exposed part (33) extends to the center position of the recessed portion (33c)) are equal to each other.

A height (H) of the protruding portion (33b) (the length of the protruding portion (33b) in the left-right direction in Fig. 3) is larger than a depth (D) of the recessed portion (33c) (the length of the recessed portion (33c) in the left-right direction in Fig. 3). Thus, in a state in which the protruding portion (33b) is fitted into the recessed portion (33c), a gap (for example, a gap of about several microns to several tens microns) is formed between the exposed parts (33) adjacent to each other. The gap is filled with solder in a soldering step.

### <Method of Processing Exposed Part>

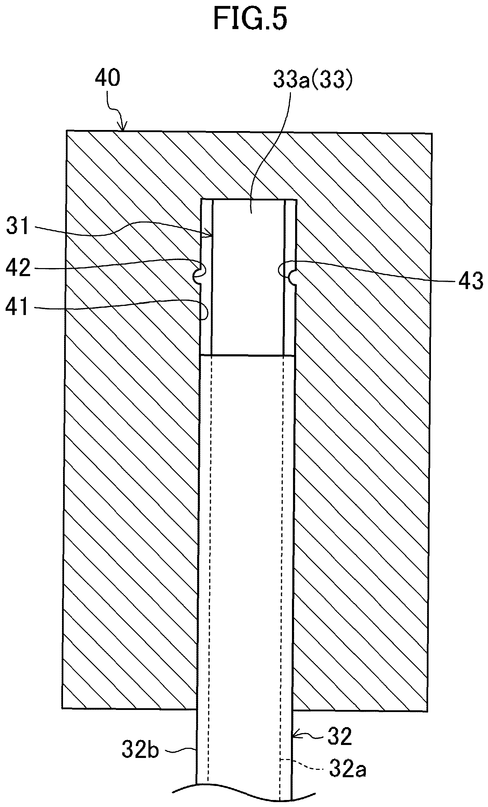

As illustrated in Fig. 5, the exposed part (33) of the conductor segment (31) is processed in a state of being inserted into a metal mold (40) for processing. In Fig. 5, the conductor segment (31) before processing is illustrated. The metal mold (40) has an insertion hole (41) for inserting the conductor segment (31). A recess (42) for forming the protruding portion (33b) of the exposed part (33) and a protrusion (43) for forming the recessed portion (33c) of the exposed part (33) are present near the bottom surface of the insertion hole (41).

First, the conductor segment (31) is inserted into the insertion hole (41) and fixed such that the tip thereof abuts the bottom surface of the insertion hole (41). Then, the exposed part (33) of the conductor segment (31) is held and compressed by a tool (not illustrated) from both sides in the orthogonal direction (first direction) in Fig. 5. Consequently, the exposed part (33) expands in the left-right direction (second direction) in Fig. 5, and the protruding portion (33b) and the recessed portion (33c) are formed.

### - Effects of Embodiment -

The rotating electric machine (10) according to the present embodiment includes the stator (20) including the segment coil (30) formed of the plurality of conductor segments (31). Each of the conductor segments (31) includes the covered part (32) that includes the conductor (32a) and the insulating material (32b) covering the conductor (32a), and the exposed part (33) that includes the exposed conductor (33a) integral with the conductor (32a) of the covered part (32) and that constitutes the end portion of the conductor segment (31). The conductor (33a) of the exposed part (33) expands more than the conductor (32a) of the covered part (32) in the arrangement direction, which is the direction in which the exposed parts (33) of the plurality of conductor segments (31) are arranged. Thus, a distance between the conductor (33a) of the exposed part (33) of the conductor segment (31) and the conductor (33a) of the exposed part (33) of the conductor segment adjacent thereto is small compared with when the conductors (33a) of the exposed parts (33) do not expand. Consequently, it is possible to easily join the conductors (33a) of the exposed parts (33) of the plurality of conductor segments (31) to each other.

In the rotating electric machine (10) according to the present embodiment, the conductor (33a) of the exposed part (33) expands on both ends in the arrangement direction more than the conductor (32a) of the covered part (32). Thus, it is possible, even when three or more conductor segments (31) are joined to each other, to reduce the distance between the conductors (33a) of the exposed parts (33) of the conductor segments (31) adjacent to each other. Consequently, it is possible to easily join the conductors (33a) of the exposed parts (33) of three or more conductor segments (31) to each other.

In the rotating electric machine (10) according to the present embodiment, the position of the end surface of the expansion part of the conductor (33a) of the exposed part (33) and the position of the outer surface of the insulating material (32b) of the covered part (32) are equal to each other in the arrangement direction. Thus, the end surface of the conductor (33a) of the exposed part (33) and the outer surface of the insulating material (32b) of the covered part (32) are flush with each other. It is thus possible to easily join the conductors (33a) of the exposed parts (33) of the plurality of conductor segments (31) to each other.

In the rotating electric machine (10) according to the present embodiment, the plurality of conductor segments (31) are each constituted by a flat wire whose cross-sectional shape is a rectangular shape and are arranged such that the short direction of the rectangular shape coincides with the arrangement direction. Thus, it is possible by compressing the conductor (33a) of the exposed part (33) in the longitudinal direction of the cross-sectional shape (rectangular shape) of the conductor segment (31) to expand the conductor (33a) of the exposed part (33) by plastic deformation. This work is easier than compressing the conductor (33a) of the exposed part (33) in the short direction of the cross-sectional shape of the conductor segment (31). Therefore, according to the present embodiment, it is possible to easily form the expansion part of the conductor segment (31).

In the rotating electric machine (10) according to the present embodiment, the conductor (33a) of the exposed part (33) of each of the conductor segments (31) includes the protruding portion (33b) and the recessed portion (33c). The protruding portion (33b) of the conductor segment (31) is fitted into the recessed portion (33c) of the conductor segment (31) adjacent thereto. Thus, when the plurality of conductor segments (31) are to be disposed to be arranged in the arrangement direction, it is possible to position the plurality of conductor segments (31) by fitting between the protruding portions (33b) and the recessed portions (33c). Consequently, it is possible to join the plurality of conductor segments (31) more easily.

In the rotating electric machine (10) according to the present embodiment, the distance (D1) from the tip of the exposed part (33) to the protruding portion (33b) and the distance (D2) from the tip of the exposed part (33) to the recessed portion (33c) are equal to each other in each of the conductor segments (31). Thus, as a result of the protruding portion (33b) of the conductor segment (31) being fitted into the recessed portion (33c) of the conductor segment (31) adjacent thereto, the tips of the two conductor segments (31) are aligned. Consequently, it is possible to join the plurality of conductor segments (31) more easily.

In the rotating electric machine (10) according to the present embodiment, the height (H) of the protruding portion (33b) is larger than the depth (D) of the recessed portion (33c) in each of the conductor segments (31). Thus, in a state in which the protruding portion (33b) of the conductor segment (31) is fitted into the recessed portion (33c) of the conductor segment (31) adjacent thereto, a minimum gap required for solder joining can be obtained between the conductors (33a) of the exposed parts (33) of the two conductor segments (31). Consequently, it is possible to perform appropriate solder joining easily. Meanwhile, when the gap is excessively narrow, solder penetrates insufficiently and generates a decrease in strength. When the gap is excessively wide, electric resistance increases and causes a decrease in motor efficiency.

A method of manufacturing the rotating electric machine (10) according to the present embodiment includes compressing the exposed part (33) of the conductor segment (31) in the first direction orthogonal to the direction in which the exposed part (33) extends to thereby expand the exposed part (33) of the conductor segment (31) in the direction in which the exposed part (33) extends and in the second direction orthogonal to the first direction. Thus, the plurality of conductor segments (31) each including the exposed part (33) expanding in the second direction can be arranged in the second direction and easily joined to each other.

### <<Other Embodiments>>

Regarding the aforementioned embodiment, following configurations may be employed.

For example, the exposed parts (33) of the plurality of conductor segments (31) may be joined to each other by welding (for example, arc welding). In this case, it is preferable that the height (H) of the protruding portion (33b) be less than or equal to the depth (D) of the recessed portion (33c) not to cause a gap to be formed between the exposed parts (33) adjacent to each other.

In addition, for example, each of the conductor segments (31) may not include the protruding portion (33b) and the recessed portion (33c).

In addition, for example, the exposed part (33) of the conductor segment (31) may expand only on one side in the arrangement direction. Even in this case, it is possible to easily join the plurality of conductor segments (31) arranged in the arrangement direction compared with when the exposed parts (33) do not expand.

In addition, for example, the position of the end surface of the expansion part of the exposed part (33) and the position of the outer surface of the insulating material (32b) of the covered part (32) may differ from each other. In other words, the end surface of the expansion part of the exposed part (33) and the outer surface of the insulating material (32b) of the covered part (32) may not be flush with each other.

In addition, for example, although the rotating electric machine (10) is constituted by an electric motor in each of the aforementioned embodiments, the rotating electric machine (10) may be constituted by a power generator.

In addition, for example, although six conductor segments (31) are joined to each other to form the segment coil (30) in each of the aforementioned embodiments, any number of the conductor segments (31) may be joined to each other to form the segment coil (30).

Although embodiments and modifications have been described above, it should be understood that various changes in the forms and the details are possible without departing from the scope of the claims.

### Industrial Applicability

As described above, the present disclosure is useful for a rotating electric machine.

### Reference Signs List

- 10: rotating electric machine
- 20: stator
- 30: segment coil
- 31: conductor segment
- 32: covered part
- 32a: conductor
- 32b: insulating material
- 33: exposed part
- 33a: conductor
- 33b: protruding portion
- 33c: recessed portion
- D1, D2: distance
- D: depth of recessed portion
- H: height of protruding portion

## Claims

1. A rotating electric machine (10) comprising a stator (20) that includes a segment coil (30) formed of a plurality of conductor segments (31),
wherein each of the conductor segments (31) includes
a covered part (32) that includes a conductor (32a) and an insulating material (32b) covering the conductor (32a), and
an exposed part (33) that includes an exposed conductor (33a) integral with the conductor (32a) of the covered part (32) and that constitutes an end portion of the conductor segment (31), and
wherein the conductor (33a) of the exposed part (33) is compressed so that it expands more than the conductor (32a) of the covered part (32) in an arrangement direction that is a direction in which the exposed parts (33) of the plurality of conductor segments (31) are arranged, and contracts more than the conductor (32a) of the covered part (32) in a direction perpendicular to the arrangement direction and
the arrangement direction is the direction in which the plurality of exposed parts (33) are joined to each other.

2. The rotating electric machine according to claim 1,
wherein the conductor (33a) of the exposed part (33) expands on both sides in the arrangement direction more than the conductor (32a) of the covered part (32).

3. The rotating electric machine according to claim 1 or claim 2,
wherein an end surface of an expansion part of the conductor (33a) of the exposed part (33) and an outer surface of the insulating material (32b) of the covered part (32) are flush with each other in the arrangement direction.

4. The rotating electric machine according to any one of claims 1 to 3,
wherein the plurality of conductor segments (31) are each constituted by a flat wire whose cross-sectional shape is a rectangular shape and are arranged such that a short direction of the rectangular shape coincides with the arrangement direction.

5. The rotating electric machine according to any one of claims 1 to 4,
wherein the conductor (33a) of the exposed part (33) of each of the conductor segments (31) includes a protruding portion (33b) and a recessed portion (33c), and
wherein the protruding portion (33b) of the conductor segment (31) is fitted into the recessed portion (33c) of the conductor segment (31) adjacent thereto.

6. The rotating electric machine according to claim 5,
wherein a distance (D1) from a tip of the exposed part (33) to the protruding portion (33b) and a distance (D2) from the tip of the exposed part (33) to the recessed portion (33c) are equal to each other in each of the conductor segments (31).

7. The rotating electric machine according to claim 5 or claim 6,
wherein a height (H) of the protruding portion (33b) is larger than a depth (D) of the recessed portion (33c) in each of the conductor segments (31).

8. The rotating electric machine according to any one of claims 1 to 7,
wherein the exposed parts (33) of the plurality of conductor segments (31) are joined to each other by soldering.

9. The rotating electric machine according to any one of claim 1 to 7,
wherein the exposed parts (33) of the plurality of conductor segments (31) are joined to each other by welding.

## Patentansprüche

1. Rotierende elektrische Maschine (10) mit einem Stator (20), der eine Segmentspule (30) aufweist, die aus einer Vielzahl von Leitersegmenten (31) gebildet ist,
wobei jedes der Leitersegmente (31)
einen abgedeckten Teil (32), der einen Leiter (32a) und ein den Leiter (32a) abdeckendes Isoliermaterial (32b) enthält, und
einen freiliegenden Teil (33) enthält, der einen freiliegenden Leiter (33a) aufweist, der mit dem Leiter (32a) des abgedeckten Teils (32) einstückig ist und der einen Endabschnitt des Leitersegments (31) bildet, und
wobei der Leiter (33a) des freiliegenden Teils (33) so komprimiert ist, dass er sich in einer Anordnungsrichtung, die eine Richtung ist, in der die freiliegenden Teile (33) der Vielzahl von Leitersegmenten (31) angeordnet sind, stärker ausdehnt als der Leiter (32a) des abgedeckten Teils (32), und sich in einer Richtung senkrecht zu der Anordnungsrichtung stärker zusammenzieht als der Leiter (32a) des abgedeckten Teils (32), und
die Anordnungsrichtung die Richtung ist, in der die Vielzahl der freiliegenden Teile (33) miteinander verbunden sind.

2. Rotierende elektrische Maschine nach Anspruch 1,
wobei sich der Leiter (33a) des freiliegenden Teils (33) auf beiden Seiten in der Anordnungsrichtung stärker ausdehnt als der Leiter (32a) des abgedeckten Teils (32).

3. Rotierende elektrische Maschine nach Anspruch 1 oder Anspruch 2,
wobei eine Endfläche eines Ausdehnungsteils des Leiters (33a) des freiliegenden Teils (33) und eine Außenfläche des Isoliermaterials (32b) des abgedeckten Teils (32) in der Anordnungsrichtung bündig zueinander sind.

4. Rotierende elektrische Maschine nach einem der Ansprüche 1 bis 3,
wobei die Vielzahl von Leitersegmenten (31) jeweils durch einen Flachdraht gebildet sind, dessen Querschnittsform eine Rechteckform ist, und so angeordnet sind, dass eine kurze Richtung der Rechteckform mit der Anordnungsrichtung zusammenfällt.

5. Rotierende elektrische Maschine nach einem der Ansprüche 1 bis 4,
wobei der Leiter (33a) des freiliegenden Teils (33) jedes der Leitersegmente (31) einen vorspringenden Abschnitt (33b) und einen vertieften Abschnitt (33c) aufweist, und
wobei der vorspringende Abschnitt (33b) des Leitersegments (31) in den vertieften Abschnitt (33c) des dazu benachbarten Leitersegments (31) eingepasst ist.

6. Rotierende elektrische Maschine nach Anspruch 5,
wobei ein Abstand (D1) von einer Spitze des freiliegenden Teils (33) zu dem vorspringenden Abschnitt (33b) und ein Abstand (D2) von der Spitze des freiliegenden Teils (33) zu dem vertieften Abschnitt (33c) in jedem der Leitersegmente (31) einander gleich sind.

7. Rotierende elektrische Maschine nach Anspruch 5 oder Anspruch 6,
wobei eine Höhe (H) des vorspringenden Abschnitts (33b) größer ist als eine Tiefe (D) des vertieften Abschnitts (33c) in jedem der Leitersegmente (31).

8. Rotierende elektrische Maschine nach einem der Ansprüche 1 bis 7,
wobei die freiliegenden Teile (33) der Vielzahl von Leitersegmenten (31) durch Löten miteinander verbunden sind.

9. Rotierende elektrische Maschine nach einem der Ansprüche 1 bis 7,
wobei die freiliegenden Teile (33) der Vielzahl von Leitersegmenten (31) durch Schweißen miteinander verbunden sind.

## Revendications

1. Machine électrique rotative (10) comprenant un stator (20) qui inclut une bobine de segment (30) formée d'une pluralité de segments de conducteur (31),
dans laquelle chacun des segments de conducteur (31) inclut
une partie couverte (32) qui inclut un conducteur (32a) et un matériau isolant (32b) recouvrant le conducteur (32a), et
une partie exposée (33) qui inclut un conducteur exposé (33a) faisant partie intégrante du conducteur (32a) de la partie couverte (32) et qui constitue une partie d'extrémité du segment de conducteur (31), et
dans laquelle le conducteur (33a) de la partie exposée (33) est comprimé de sorte qu'il se dilate plus que le conducteur (32a) de la partie couverte (32) dans une direction d'agencement qui est une direction dans laquelle les parties exposées (33) de la pluralité de segments de conducteur (31) sont agencées, et se contracte plus que le conducteur (32a) de la partie couverte (32) dans une direction perpendiculaire à la direction d'agencement et
la direction d'agencement est la direction dans laquelle la pluralité de parties exposées (33) sont jointes les unes aux autres.

2. Machine électrique rotative selon la revendication 1,
dans laquelle le conducteur (33a) de la partie exposée (33) se dilate sur les deux côtés dans la direction d'agencement plus que le conducteur (32a) de la partie couverte (32).

3. Machine électrique rotative selon la revendication 1 ou la revendication 2,
dans laquelle une surface d'extrémité d'une partie de dilatation du conducteur (33a) de la partie exposée (33) et une surface externe du matériau isolant (32b) de la partie couverte (32) sont en affleurement l'une avec l'autre dans la direction d'agencement.

4. Machine électrique rotative selon l'une quelconque des revendications 1 à 3,
dans laquelle la pluralité de segments de conducteur (31) sont chacun constitués d'un fil plat dont la forme en section transversale est une forme rectangulaire et sont agencés de telle sorte qu'une direction courte de la forme rectangulaire coïncide avec la direction d'agencement.

5. Machine électrique rotative selon l'une quelconque des revendications 1 à 4,
dans laquelle le conducteur (33a) de la partie exposée (33) de chacun des segments de conducteur (31) inclut une partie saillante (33b) et une partie évidée (33c), et
dans laquelle la partie saillante (33b) du segment de conducteur (31) est ajustée dans la partie évidée (33c) du segment de conducteur (31) adjacent à celle-ci.

6. Machine électrique rotative selon la revendication 5,
dans laquelle une distance (D1) d'une pointe de la partie exposée (33) à la partie saillante (33b) et une distance (D2) de la pointe de la partie exposée (33) à la partie évidée (33c) sont égales l'une à l'autre dans chacun des segments de conducteur (31).

7. Machine électrique rotative selon la revendication 5 ou la revendication 6,
dans laquelle une hauteur (H) de la partie saillante (33b) est plus grande qu'une profondeur (D) de la partie évidée (33c) dans chacun des segments de conducteur (31).

8. Machine électrique rotative selon l'une quelconque des revendications 1 à 7,
dans laquelle les parties exposées (33) de la pluralité de segments de conducteur (31) sont jointes les unes aux autres par brasage.

9. Machine électrique rotative selon l'une quelconque des revendications 1 à 7,
dans laquelle les parties exposées (33) de la pluralité de segments de conducteur (31) sont jointes les unes aux autres par soudage.
